# DEMANDE DE BREVET EUROPEEN

(11) **EP 0 756 192 A1**
(43) Date de publication de la demande: **29.01.1997**
(21) Numéro de dépôt: 96401616.6
(22) Date de dépôt: 19.07.1996
(51) Int. Cl.: G02F 1/1335

(54) **Ecran de visualisation à cristal liquide**

(30) Priorité: 25.07.1995 FR 9508995
(71) Demandeur: SEXTANT AVIONIQUE, F-78140 Velizy (FR); THOMSON multimedia, 92400 Courbevoie (FR)
(72) Inventeur: De Lauzun, Frédéric, Thomson-CSF, SCPI, 92402 Courbevoie Cedex (FR); Haas, Gunther, Thomson-CSF, SCPI, 92402 Courbevoie Cedex (FR)
(74) Mandataire: Guérin, Michel

(57) **Abrégé**

L'invention concerne un écran de visualisation comprenant des moyens pour améliorer l'angle de vue depuis lequel on perçoit correctement les images affichées sur l'écran.

Ces moyens comprennent un dispositif d'éclairage (1) collimaté selon un plan YOZ orthogonal au plan XOZ dans lequel l'écran (2) fournit les meilleures caractéristiques en terme de contraste et/ou de niveaux de gris, ledit dispositif d'éclairage collimaté étant en face avant de la cellule. Les moyens comprennent aussi un dispositif de distribution de la lumière (4) (par réfraction ou diffusion) dans le plan YOZ, en sortie de la cellule à cristal liquide (2).

Ces moyens peuvent être complétés par un ou plusieurs films de compensation (3), placés en sortie de la cellule, pour augmenter l'angle de vue dans le plan XOZ.

Applications : Avionique, Affichage images vidéo

## Description

Le domaine de l'invention est celui des dispositifs d'affichage électrooptique de type cristal liquide (LCD) modulant directement la lumière les traversant, pouvant être utilisés aussi bien dans le domaine des écrans informatiques, des écrans pour l'avionique ou pour l'affichage d'images vidéo.

Il s'agit d'écrans passifs ou d'écrans à matrice active à vision directe comprenant généralement dans le cas d'écrans à matrice active :
- un substrat transparent sur lequel est réalisée une matrice d'éléments de commutation ;
- une cellule à cristal liquide dont un des substrats est la matrice active (le matériau généralement utilisé est le nématique en hélice) ;
- un deuxième substrat sur lequel on dépose les filtres colorés des écrans couleurs en une mosaïque de points élémentaires RVB ;
- des polariseurs et un module de rétro-éclairage permettant d'assurer la vision directe, à base de tubes fluorescents.

Plus précisément, dans le cas d'un LCD à cristal liquide nématique en hélice, les molécules sont orientées parallèlement au substrat par des couches d'alignement, de telle sorte qu'en l'absence de champ électrique, elles forment une hélice dans l'épaisseur de la cellule. La cellule est placée entre deux polariseurs croisés ou parallèle entre eux, c'est-à-dire dont les polarisations sont perpendiculaires ou parallèles entre elles.

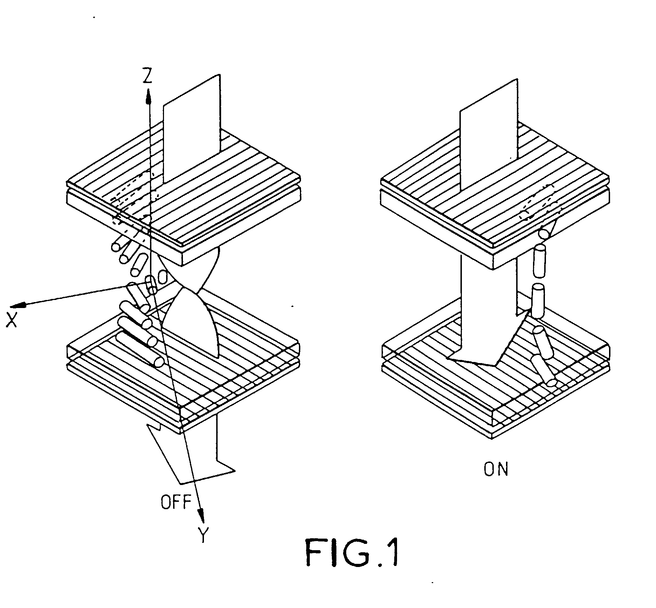

Par rapport à la direction d'alignement des molécules au niveau des substrats, on peut définir trois axes (x, y, z) tels que ceux illustrés sur la figure 1 représentant de manière classique une cellule à cristal liquide. La direction OZ correspondant à la normale au plan de la cellule, la direction OY est définie au centre de la cellule par le grand axe des molécules cristal liquide, la direction OX étant perpendiculaire aux directions OX et OY. De manière classique, la direction OY correspond à l'axe dit vertical de la cellule et la direction OX correspond à l'axe dit horizontal de la cellule.

Dans le cas de figure où les polariseurs sont croisés, la lumière polarisée rectilignement entre dans la cellule, subit une rotation traversant la couche de cristal liquide puis passe au travers du second polariseur. Comme l'illustre la figure 1 dans ce cas de figure, le dispositif présente une forte transmission de lumière dans cet état non activé puisque l'orientation des polariseurs suit le cheminement de polarisation au sein de l'hélice. On définit ainsi un état NW (normally while), en état OFF.

Lorsqu'un champ électrique est appliqué perpendiculairement au plan de la cellule, les molécules ont tendance à s'orienter parallèlement au champ. La structure en hélice est détruite et la lumière polarisée ne subit plus de rotation à sa traversée dans la cellule de sorte qu'elle est absorbée par le polariseur de sortie, en état ON.

Dans le cas de figure où les polariseurs sont parallèles, la situation est inversée. L'état non activé, correspond à l'état noir NB (normally black) alors que l'état excité devient l'état dans lequel la transparence est la plus élevée.

Dans les deux cas de figures des transmissions intermédiaires peuvent être obtenues par des champs électriques intermédiaires correspondant à une orientation partielle des molécules cristal liquide, de sorte que le dispositif permet l'affichage d'images vidéo nécessitant de nombreux niveaux de gris.

L'utilisation de filtres colorés et de ces nombreux niveaux de gris permet l'affichage d'images vidéo en couleurs.

Dans ces dispositifs d'affichage électrooptique un des problèmes majeurs que l'on cherche à résoudre est d'améliorer l'angle de vue d'observation des images affichées puisque par construction ces dispositifs présentent de fortes inhomogénéités lorsque les conditions angulaires d'observation changent.

En effet, lorsque le dispositif est observé suivant la normale au plan des couches, il présente un très bon contraste (rapport de la transmission à l'état non activé sur la transmission à l'état activé). Cependant lorsque le dispositif est observé selon une direction inclinée par rapport à la normale au plan de la cellule, la transmission de l'état noir augmente et fait chuter le contraste selon cette direction.

De plus lorsqu'une image vidéo est affichée par un tel dispositif et observée suivant une direction inclinée par rapport à la normale au substrat, le même phénomène de variation de transmission affecte aussi bien le niveau saturé (état dans lequel les molécules ont été orientées) que tous les niveaux de gris, mais la loi des variations est différentes pour chaque niveau. Ceci entraîne des phénomènes d'inversion de contraste, c'est-à-dire qu'un niveau plus sombre qu'un autre suivant la normale devient plus claire que ce dernier suivant une direction inclinée.

Les problèmes d'inversion de niveau de gris et de champ d'observation limité viennent d'être décrits dans le cas de cristal nématique en hélice, mais sont rencontrés de manière plus générale, également avec des cellules de type STN (super twist nématique), des cellules de type Freedericks (structure planaire sans formation d'hélice, utilisant un effet basé sur la biréfringence contrôlée), des cellules de type BCE (biréfringence contrôlée électriquement) dans lesquelles les molécules au repos sont orientées de manière homéotrope et présentent une anisotropie diélectrique négative.

Pour résoudre ces problèmes de niveau de gris et de champ d'observation limité, des solutions ont été proposées telles que :
- la modification de la structure spatiale de la cellule en créant dans chaque élément d'images (pixel), plusieurs domaines à l'intérieur desquels, soit l'orientation des molécules du cristal liquide sur le substrat de la cellule, soit l'orientation du champ électrique appliqué, soit l'intensité de ce champ est différent. Néanmoins, cette solution conduit à une plus grande complexité du domaine ;
- l'ajout d'un film dit de compensation et biréfringent. Il s'agit d'un film de molécules présentant une anisotropie diélectrique négative, permettant d'améliorer la caractéristique de l'état noir et donc du contraste. Cette méthode permet d'élargir la zone horizontale pour laquelle on a un bon contraste, mais pas la zone verticale.

Or l'invention repose sur l'analyse que pour la plupart des effets électrooptiques utilisés dans les dispositifs à cristal liquide (LCD) (de type nématique en hélice, ou super twist en hélice ...) on observe un comportement angulaire au niveau des images perçues, différent dans deux plans de symétrie :
* dans un premier plan, le plan xoz défini précédemment correspondant classiquement au plan horizontal, la caractéristique angulaire est pratiquement symétrique par rapport à la normale. Le contraste est assez élevé même pour des incidences assez élevées par rapport à la normale à la cellule, et le problème des inversion de gris n'est pas très fort ;
* dans un second plan, le plan yoz défini précédemment correspondant classiquement au plan vertical, la caractéristique angulaire n'est pas symétrique, montrant notamment un maximum de contraste hors axe, pour les niveaux intermédiaires, ce maximum se déplace vers des angles plus élevés. Par conséquence, cela donne lieu à de fortes inversions de niveaux de gris dans la moitié de ce second plan.

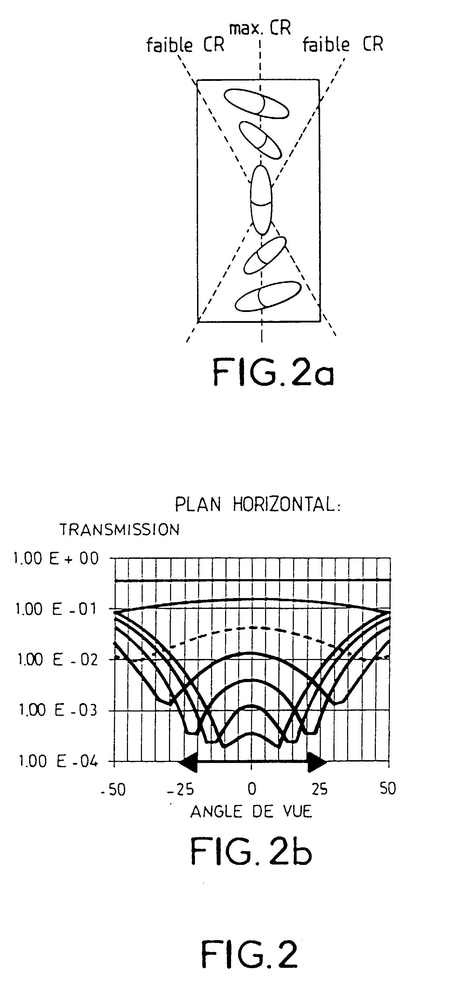

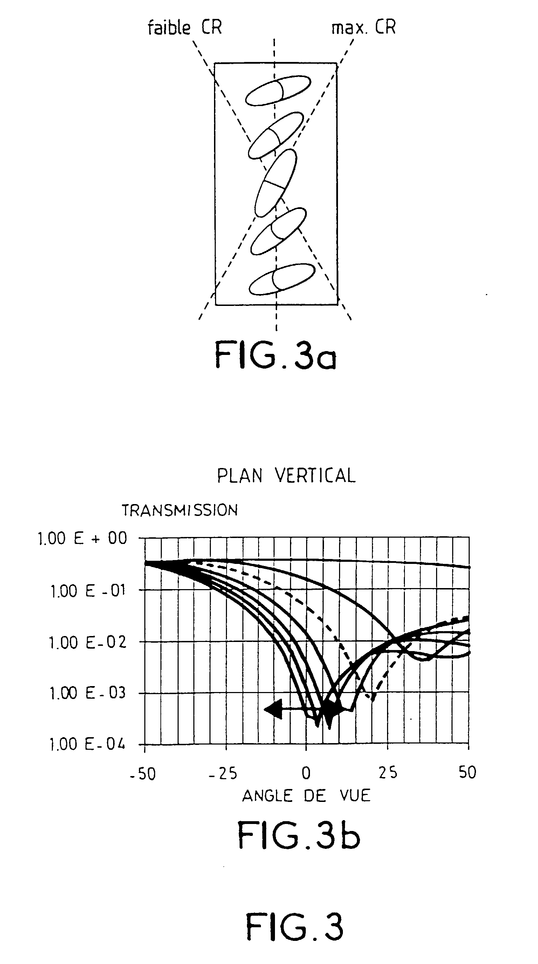

Pour illustrer ce phénomène, les figures 2b et 3b sont relatives à l'évolution de la transmission en fonction de l'angle d'incidence depuis lequel une cellule à cristal liquide de type nématique en hélice est observée entre polariseurs croisés et ce pour différentes tensions appliquées. La figure 2 est relative au plan horizontal, en figure 2a est illustrée la distribution des molécules cristal liquide dans l'état adressé de la cellule. La figure 3 est relative au plan vertical, en figure 3a est illustrée la distribution des molécules cristal liquide également dans l'état excité de la cellule. Cette figure 3a met en évidence l'origine de la dissymétrie de contraste évoquée précédemment (les inversions de gris sont mises en évidence sur les figures 2b et 3b par les courbes de transmission qui se chevauchent).

Typiquement dans le cas de l'affichage d'images vidéo utilisant une cellule du type nématique en hélice, l'angle de vue utilisable est limité à ± 30°C en horizontale et compris entre -25° et +5° en verticale pour obtenir un contraste minimum de 10 et aucune inversion de gris.

Notons que pour d'autres applications telles que l'avionique, il peut être également essentiel de maintenir les informations lisibles sur l'écran même pour un déplacement angulaire du pilote par rapport à son écran.

Le constat de comportement différent des caractéristiques des cellules à cristal liquide en terme de contraste et/ou de niveaux de gris dans différents plans est général aux différents types de cellules précédemment évoqués (TN, STN, Freedericks, BCE) et l'on peut généralement définir à partir d'une direction OZ normale ou sensiblement normale au plan de la cellule, un plan XOZ dans lequel la caractéristique angulaire en terme de contraste et/ou de niveau de gris est la plus favorable que dans un plan YOZ perpendiculaire audit plan XOZ.

Pour pallier les insuffisances de comportement dans le plan YOZ par rapport à l'écran, l'objet de l'invention est d'envoyer un éclairage collimaté selon ce plan YOZ, sur la cellule à cristal liquide pour distribuer la lumière en sortie de la cellule, selon ce même plan YOZ.

Ainsi l'invention a pour objet un écran de visualisation à cristal liquide comprenant un dispositif d'éclairage, une cellule à cristal liquide, ladite cellule possédant la caractéristique la plus favorable, en terme de contraste et/ou en terme de niveaux de gris dans un plan XOZ, si O est le point central de la cellule et OZ une direction normale ou sensiblement normale au plan de la cellule, caractérisé en ce qu'il comprend :
- des moyens pour collimater le flux lumineux issu du dispositif d'éclairage dans un plan YOZ orthogonal au plan XOZ, lesdits moyens étant situés du même côté que le dispositif d'éclairage par rapport à la cellule ;
- des moyens pour distribuer le flux lumineux selon le plan YOZ, lesdits moyens étant placés du côté opposé au dispositif d'éclairage, par rapport à la cellule.

Dans le cadre de cellules dans lesquelles les molécules sont orientées planairement l'invention a pour objet un écran de visualisation à cristal liquide comprenant un dispositif d'éclairage, une cellule à cristal liquide comprenant entre deux substrats des molécules à cristal liquide orientées planairement au substrat, le grand axe des molécules définissant au centre de la cellule en un point 0 une direction OY caractérisé en ce qu'il comprend :
- des moyens pour collimater le flux lumineux issu du dispositif d'éclairage dans un plan p₁ défini par la direction OY et la direction OZ normale ou sensiblement normale au plan de la cellule, lesdits moyens étant situés du même côté que le dispositif d'éclairage par rapport à la cellule ;
- des moyens pour distribuer le flux lumineux selon le plan p₁, lesdits moyens étant placés du côté opposé au dispositif d'éclairage, par rapport à la cellule.

Les moyens pour distribuer le flux lumineux peuvent être des moyens de diffusion ou de réfraction (dans ce cas il peut s'agir de réseau de microlentilles).

Pour perfectionner l'écran de visualisation selon l'invention, il est possible de combiner les moyens de collimation/distribution utilisés dans le plan YOZ avec un film de compensation permettant d'augmenter l'angle de vue dans un plan XOZ orthogonal au plan YOZ.

Lorsque les moyens de distribution de la lumière sont des moyens de diffusion, ces moyens peuvent avantageusement être de type holographiques permettant par la même de limiter les phénomènes de rétrodiffusion comme il sera explicité ultérieurement.

L'invention sera mieux comprise et d'autres avantages apparaîtront à la lecture de la description qui va suivre donnée à titre non limitatif et grâce aux figures annexées parmi lesquelles :
- la figure 1 illustre une configuration classique d'écran de visualisation à cristal liquide nématique en hélice, observée entre polariseurs croisés ;
- la figure 2 illustre l'évolution de la transmission d'une cellule nématique en hélice en fonction de l'angle d'observation par rapport à la normale au plan de la cellule, dans un plan horizontal et ce pour différentes tensions appliquées sur la cellule ;
- la figure 3 illustre l'évolution de la transmission d'une cellule nématique en hélice en fonction de l'angle d'observation par rapport à la normale au plan de la cellule, dans un plan vertical et ce pour différentes tensions appliquées à la cellule ;
- la figure 4 schématise un écran de visualisation selon l'invention ;
- la figure 5 illustre l'évolution du pourcentage d'énergie provenant d'un pixel et se mélangeant à celle issue d'un pixel voisin dans un exemple d'écran de visualisation selon l'invention ;
- la figure 6 illustre un premier exemple de dispositif de rétro-éclairage/moyens de collimation, utilisé dans un écran selon l'invention ;
- la figure 7 illustre un second exemple de dispositif de rétro-éclairage/moyens de collimation, utilisé dans un écran selon l'invention ;
- la figure 8 illustre l'évolution de la transmission en fonction de l'angle de vue dans un plan horizontal, pour une cellule à cristal liquide nématique en hélice utilisant un film de compensation ;

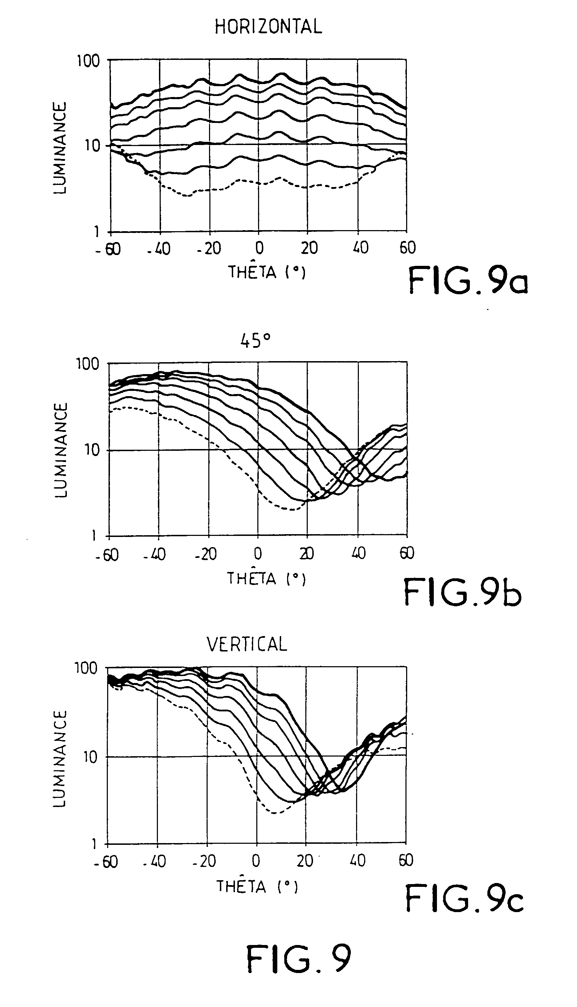

- la figure 9 illustre l'évolution de la luminance en fonction de l'angle de vue dans des plans : horizontal (9a), incliné (9b), vertical (9c) pour un écran à cristal liquide nématique en hélice, selon l'art connu ;
- la figure 10 illustre l'évolution de la luminance en fonction de l'angle de vue dans des plans : horizontal (10a), incliné (10b), vertical (10c) pour un écran à cristal liquide nématique en hélice, selon l'invention.

L'invention va être décrite dans le cadre d'écran de visualisation utilisant des cellules à cristal liquide à orientation planaire (TN, STN, Freedericks) mais peut également être appliquée dans le cadre de cellules de type BCE.

De manière générale, l'écran de visualisation comprend des moyens de collimation dans un plan seulement. Ce type de collimation est très bien adapté aux sources lumineuses classiques en forme de cylindre, comme par exemple les tubes fluorescents qui sont généralement utilisés dans des systèmes de rétro-éclairage conventionnels.

La collimation dans un plan seulement, couplée à une diffusion dans ce même plan présente d'autre part l'avantage de générer une rétro-diffusion plus faible que celle qui aurait été générée avec un système collimation/diffusion dans deux plans. Ce problème de rétro-diffusion représente dans certaines applications telles que les écrans pour l'avionique, un problème majeur, en raison de la forte luminosité ambiante.

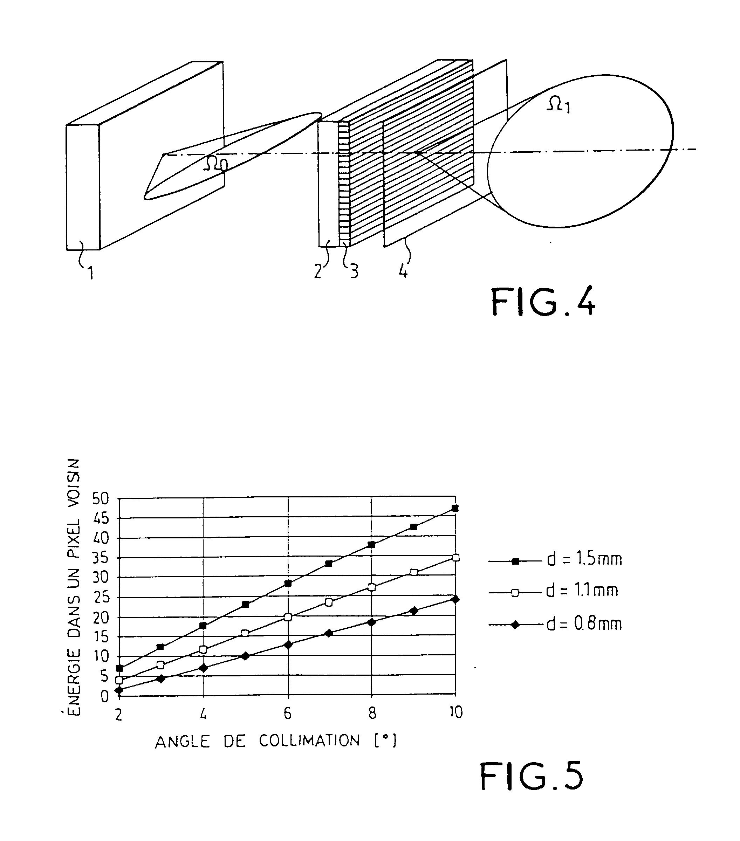

La figure 4 schématise un écran de visualisation selon l'invention qui comprend :
- un système d'éclairage 1 collimaté dans le plan vertical, c'est-à-dire que le flux lumineux à 50 % de luminance est compris dans un plan YOZ correspondant souvent au plan vertical avec une divergence pouvant typiquement être comprise entre ± 1° et ± 20°, et dans un plan horizontal avec une divergence comprise entre ± 15° et ± 90°, définissant l'angle solide Ωₒ ;
- une cellule à cristal liquide 2 insérée entre deux polariseurs ;
- un ou plusieurs films optionnels 3 de compensation permettant d'améliorer l'angle de vue dans le plan XOZ correspondant souvent au plan horizontal ;
- des moyens 4 pour distribuer la lumière dans le plan vertical dans un angle solide Ω₁, il peut s'agir par exemple d'un réseau de microlentilles ou d'un diffuseur holographique ;
- un polariseur optionnel 5, permettant de diminuer la rétro-diffusion.

Pour valider le concept de l'invention à savoir utiliser un système de collimation/diffusion dans un plan il est important de vérifier que la résolution spatiale obtenue avec un écran de visualisation selon l'invention demeure tout à fait satisfaisante et que les informations issues de différents pixels ne se mélangent pas pour l'observateur placé côté diffuseur par rapport à la cellule cristal-liquide.

Ainsi, l'on peut montrer que pour un écran présentant des pixels dont la taille selon le plan YOZ est de 270 µm (dimension classique) séparés par une matrice noire de largeur 30 µm, le pourcentage d'énergie provenant d'un pixel et se mélangeant à l'énergie provenant d'un pixel voisin reste faible. Pour illustrer cette caractéristique, la figure 5 illustre ce pourcentage d'énergie dans le cas d'une collimation à ± 5 et pour différentes épaisseurs de l'ensemble substrat de la cellule à cristal liquide/système de diffusion/polariseur de sortie.

### Exemples de réalisation

De manière générale, le dispositif d'éclairage peut comprendre des tubes fluorescents couplés à des réflecteurs qui assurent la fonction de collimation.

La forme du réflecteur peut être totalement ou partiellement parabolique. Il peut s'agir de concentrateurs optiques décrits notamment dans le livre "High Collection Nonimaging Optics de Welford et Winston, Academic Press 1989, le réflecteur peut être également un simple film réfléchissant collé autour du tube fluorescent.

### 1. Systèmes de rétro-éclairage collimaté dans un plan

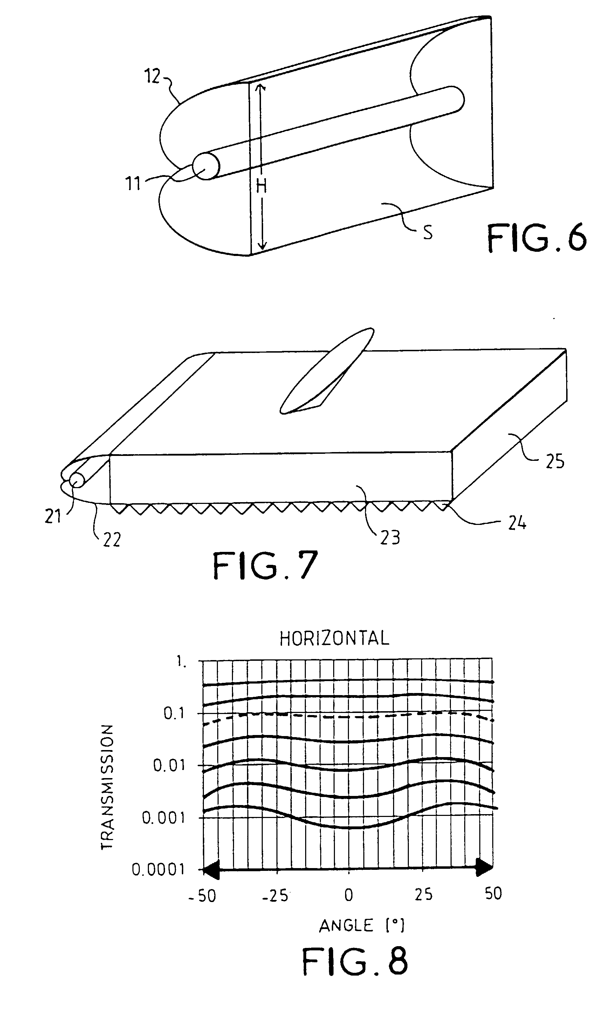

Dans un premier exemple de réalisation, on obtient la collimation de la lumière selon le plan YOZ, issue de la source grâce à un tube fluorescent 11 dans un réflecteur 12 concentrateur optique de forme parabolique comme illustré en figure 6. Dans ce cas l'angle de collimation est déterminé par le rapport entre la hauteur H du réflecteur et la surface S correspondant à la circonférence du tube inséré dans le réflecteur.

Le système de rétro-éclairage peut consister en un seul élément tel qu'il vient d'être décrit, ou en un réseau linéaire de tels éléments, accolés au plan de la cellule à cristal liquide.

Dans une seconde variante, illustrée en figure 7, un tube fluorescent 21 est inséré dans un réflecteur 22 de forme parabolique, l'ensemble est couplé à un guide d'onde plan 23 (lame de verre ou de plastique par exemple). La lumière sort du guide par réflexion spéculaire sur un réseau de microprisme 24, soit par réflexion totale, soit par réflexion sur une couche réfléchissante (par exemple de l'aluminium) déposée sur le réseau. Sur l'autre tranche du guide d'onde 25, on peut apposer soit une couche réfléchissante, soit un deuxième ensemble tube fluorescent/réflecteur.

### 2. Cellule à cristal liquide

La cellule peut comprendre comme matériau électrooptique, tout type de cristal liquide capable de passer d'un état transparent à un état obscur, il peut notamment s'agir de nématique organisé dans la cellule en nématique en hélice (TN) grâce à un ancrage au niveau des substrats de la cellule, particuliers.

Il peut également s'agir de cellule à base de cholestérique constituant une cellule de type STN (supertwist nématique).

Il peut encore s'agir comme cela a été évoqué précédemment de cellule de Freedericks.

Il peut aussi s'agir de cellule BCE.

Pour optimiser les performances d'angle de vue dans un écran de visualisation selon l'invention, la cellule à cristal liquide peut avantageusement être couplée à un ou plusieurs films de compensation.

A titre d'exemple, dans le cas d'une cellule de type (TN) fonctionnant entre polariseurs croisés on peut utiliser un ou plusieurs films compensateurs (par exemple des lames retardatrices) montées entre les polariseurs et la cellule à cristal liquide, les films pouvant être placés de part et d'autre de la cellule. Typiquement, il peut s'agir de films étirés de polyvinyl-alcool (PVA) ou de polycarbonate (PC). En étirant une feuille de PVA ou PC dans une certaine direction, on obtient une matière biréfringente ayant un ellipsoïde d'indice qui ressemble à un cigare, l'axe long du cigare aligné dans la direction d'étirage. De tels films sont commercialisés par la société Nitto.

Pour la compensation d'une cellule nématique en hélice comme décrit, il faut une matière ayant un ellipsoïde d'indice qui ressemble à une assiette plate, qu'on peut obtenir en étirant la feuille dans deux directions perpendiculaires pour obtenir une biréfringence négative capable de compenser la biréfringence positive du cristal liquide nématique.

Alternativement on peut remplacer l'assiette plate par deux films du type cigare croisés, ce qui marche très bien si l'on s'intéresse à la caractéristique angulaire dans un plan seulement (typiquement le cas de l'invention).

Typiquement, si cette différence d'indice dans le cristal liquide est telle que la différence de marche Δn.e est voisine de 475 nm au sein de la cellule (e épaisseur de la cellule, Δn différence entre l'indice ordinaire et l'indice extraordinaire), on dispose de films compensateurs tels qu'ils compensent cette différence à hauteur d'environ 340 nm.

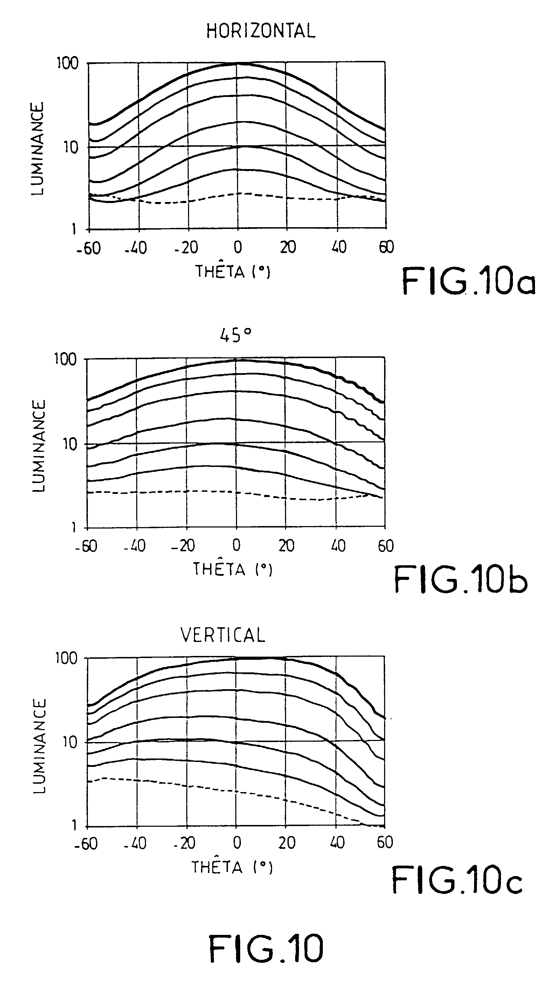

La figure 10 illustre ces performances en donnant l'évolution de la transmission en fonction de l'angle de vue dans un plan horizontal pour les mêmes tensions de commande que celles indiquées en figure 2 appliquées sur le même de type de cellule mais sans film de compensation.

### 3. Moyens de diffusion de la lumière dans un plan

Les moyens de distribution peuvent être de type réseau de microlentilles.

Les moyens de diffusion utilisés dans l'écran de visualisation selon l'invention peuvent aussi avantageusement être de type holographiques.

Rappelons qu'un hologramme enregistre les interférences entre une onde objet O₀ et une onde de référence Oᵣ. L'hologramme une fois développé restitue l'onde objet s'il est éclairé par l'onde de référence.

Dans le cas d'un diffuseur holographique, à l'enregistrement, l'onde objet est constituée de l'onde issue d'un diffuseur éclairé par une onde plane, ledit diffuseur étant placé parallèlement au milieu holographique dans lequel on veut enregistrer des interférences. Ce milieu peut être un milieu photosensible de type photopolymère ou gélatine bichromatée capable d'enregistrer l'intensité de la figure d'interférences entre les deux ondes sous forme de variation d'indice de réfraction (hologramme de phase).

L'hologramme développé restitue l'onde diffusé Oₛ s'il est éclairé par une onde identique à la référence, Oᵢ lors de l'enregistrement.

Si les conditions de Bragg sont vérifiées par le réseau enregistré à savoir 2πdλ/nₒΛ² >> 1
avec
d épaisseur de l'hologramme
λ longueur d'onde d'enregistrement
nₒ indice moyen du milieu photosensible
Λ pas moyen du réseau
toute l'énergie de l'onde Oᵢ dite "de lecture" peut être re-dirigée dans la direction choisie avec un lobe de diffusion choisi.

Il est à noter que ce type de diffuseur est extrêmement sélectif et notamment pour la rétrodiffusion de l'éclairage ambiant puisqu'il ne génère de la rétrodiffusion que selon la direction de l'onde Oᵢ.

Pour réaliser le réseau de phase dans le film utilisé, il est également possible de réaliser une structure réseau en relief de type hologramme de surface. Actuellement, de tels diffuseurs holographiques sont des produits commercialisés par POC (Physical Optics Corporation, Tonance CA).

### Exemple d'écran de visualisation selon l'invention

Les performances d'un écran de visualisation ont été évaluées sur l'exemple suivant :
1. le système de rétro-éclairage utilise un guide en acrylique avec des micro-prismes aluminisés, la surface illuminée est de 70x90 mm².
2. une cellule à cristal liquide de type nématique en hélice en mode polariseurs croisés (référence Toshiba TFD 40 W 13-MS) sans film de compensation.
3. un diffuseur holographique (référence Optics corporation LSD 20°x80° soit une collimation à ± 10° et ± 40°)
4. un polariseur supplémentaire après diffuseur. Un polariseur supplémentaire, en sortie du diffuseur permet d'augmenter le contraste en lumière ambiante puisque la polarisation d'une onde traversant le diffuseur est essentiellement conservée alors que la polarisation d'une onde rétro-diffusée est essentiellement détruite. Sa polarisation est choisie parallèle à celle du polariseur situé en sortie de la cellule à cristal liquide.

On obtient les angles de vue suivants pour l'écran selon l'invention et le même écran sans dispositif monoaxe de collimation/diffusion

| Angle de vue | Ecran selon l'invention | Ecran de l'art antérieur |
|---|---|---|
| horizontal | ± 45° | ± 45° |
| vertical | -50°, +60° | -10°, +15° |

De plus les figures 11 et 12 illustrent la luminance en fonction de l'angle de vue dans un plan horizontal, dans un plan à 45° et dans un plan vertical respectivement pour un écran selon l'art antérieur et pour l'écran selon l'invention et pour différentes tensions de commande. Il ressort très clairement de ces figures que le problème d'inversion de gris a pu être résolu grâce à l'écran de visualisation proposé dans l'invention.

Tel qu'a été décrit l'écran de visualisation selon l'invention, on obtient de meilleures performances d'angle de vue en verticale qu'en horizontale.

Selon les applications ciblées, on peut choisir d'obtenir les meilleures performances possibles dans le plan horizontal. Pour cela on tourne les directions d'alignement du cristal liquide par rapport aux orientations classiquement retenues de manière à avoir au centre de la cellule, des molécules cristal liquide dont le grand axe est horizontal. Les moyens de collimation/diffusion sont dans ce cas utilisés dans le plan horizontal.

Par ailleurs, il est à noter que pour la plupart des dispositifs LCD, la meilleure caractéristique en terme de contraste, n'est pas atteinte dans un plan perpendiculaire au plan de la cellule, mais dans un plan légèrement incliné par rapport à la normale au plan de la cellule.

Par exemple, pour l'effet nématique en hélice, en mode polariseurs croisés, la meilleure caractéristique en terme de contraste est atteinte dans un plan incliné de 5° à 15° par rapport à la normale. Dans ce cas de figure, la direction OZ fait donc un léger angle avec la normale au plan de la cellule. On peut donc améliorer la performance du système de l'invention en utilisant un système de rétro-éclairage 1 adapté de façon à collimater dans un plan identique à celui dans lequel les performances du dispositif sont les meilleures.

Typiquement, lorsqu'on utilise un dispositif de rétro-éclairage avec un ensemble de tubes fluorescents et de réflecteurs paraboliques couplés à un guide d'onde plan avec microprismes en face arrière, une simple modification de l'angle des prismes permet d'atteindre l'objectif fixé.

Le dispositif selon l'invention utilisant un système de collimation de la lumière, en entrée dans la cellule, permet de plus avantageusement d'envisager d'utiliser les filtres colorés au niveau du substrat considéré de sortie, à l'extérieur dudit substrat. Ceci représente un atout majeur en matière de coût et de facilité de technologie (par exemple impression de type photographique pour réaliser les filtres à l'extérieur de la cellule).

En effet, un système de rétro-éclairage collimaté permet d'avoir une certaine distance entre la couche de cristal liquide et la couche de filtres colorés. Afin de ne pas diminuer la saturation de couleurs, on doit tout de même envisager un angle de collimation assez faible compris environ entre ± 1° et ± 7°, et des épaisseurs de substrat également relativement faibles (environ 0,7 mm).

De plus, en plaçant les moyens de diffusion à une certaine distance du substrat de sortie de la cellule à cristal liquide, on peut supprimer partiellement la visibilité des filtres colorés (lorsque ces derniers sont arrangés en stripe) en mélangeant légèrement les faisceaux lumineux issus de chacun des filtres colorés R, V, B.

## Revendications

1. Ecran de visualisation à cristal liquide comprenant un dispositif d'éclairage, une cellule à cristal liquide, ladite cellule possédant la caractéristique la plus favorable, en terme de contraste et/ou en terme de niveaux de gris dans un plan XOZ, si O est le point central de la cellule et OZ une direction normale ou sensiblement normale au plan de la cellule, caractérisé en ce qu'il comprend :
- des moyens pour collimater le flux lumineux issu du dispositif d'éclairage dans un plan YOZ orthogonal au plan XOZ, lesdits moyens étant situés du même côté que le dispositif d'éclairage par rapport à la cellule ;
- des moyens pour distribuer le flux lumineux selon le plan YOZ, lesdits moyens étant placés du côté opposé au dispositif d'éclairage, par rapport à la cellule.

2. Ecran de visualisation selon la revendication 1, caractérisé en ce que la cellule à cristal liquide comprend entre deux substrats des molécules cristal liquide orientées planairement au substrat, le grand axe des molécules définissant au centre O de la cellule, la direction OY permettant de définir le plan YOZ.

3. Ecran de visualisation selon l'une des revendications 1 à 2, caractérisé en ce qu'il comprend un ou plusieurs films de compensation, situés entre la cellule à cristal liquide et les moyens de distribution de la lumière, lesdits films permettant d'augmenter le flux lumineux homogène dans le plan XOZ.

4. Ecran de visualisation selon l'une des revendications 1 à 3, caractérisé en ce que le dispositif d'éclairage et les moyens de collimation comprennent un ou plusieurs tubes fluorescents (1) insérés dans des réflecteurs de forme cylindrique ou parabolique.

5. Ecran de visualisation selon la revendication 4, caractérisé en ce qu'il comprend un ou plusieurs ensembles définis par un tube (21) fluorescent, inséré dans un réflecteur (22), chaque ensemble étant situé sur la face latérale d'un guide d'onde dont la face opposée à la cellule à cristal liquide comprend des moyens pour extraire la lumière de façon collimatée en direction de ladite cellule.

6. Ecran de visualisation selon la revendication 5, caractérisé en ce que les moyens pour extraire la lumière consistent en un réseau de microprismes (24).

7. Ecran de visualisation selon l'une des revendications 1 à 6, caractérisé en ce que les moyens pour distribuer la lumière dans le plan YOZ, comprennent un réseau de microlentilles.

8. Ecran de visualisation selon l'une des revendications 1 à 6, caractérisé en ce que les moyens pour distribuer la lumière dans le plan XOZ, comprennent un diffuseur holographique.

9. Ecran de visualisation selon l'une des revendications 1 à 8, caractérisé en ce qu'il comprend un polariseur (5), en sortie des moyens de distribution de la lumière.

10. Ecran de visualisation selon l'une des revendications 1 à 9, caractérisé en ce que l'un des substrats comprend une matrice d'éléments de commutation, l'autre substrat comprenant en face extérieure des filtres colorés.
